Europäisches Patentamt

European Patent Office

Office européen des brevets

(19)

(11) Veröffentlichungsnummer: **0 270 835 B1**

(12) **EUROPÄISCHE PATENTSCHRIFT**

(45) Veröffentlichungstag der Patentschrift: **15.05.91**

(51) Int. Cl.5: **H04N 5/782**, H04N 7/087

(21) Anmeldenummer: **87116212.9**

(22) Anmeldetag: **04.11.87**

(54) **Einrichtung zur Programmierung eines Videorecorders.**

(30) Priorität: **08.12.86 DE 3641864**

(43) Veröffentlichungstag der Anmeldung:
**15.06.88 Patentblatt 88/24**

(45) Bekanntmachung des Hinweises auf die
Patenterteilung:
**15.05.91 Patentblatt 91/20**

(84) Benannte Vertragsstaaten:
**AT DE FR GB IT**

(56) Entgegenhaltungen:
**EP-A- 0 037 077**
**EP-A- 0 145 677**
**DE-A- 3 335 082**

**ELEKTRONIK, Band 34, Nr. 12, 14. Juni 1985,**
**Seiten 163-168, München, DE; U. WILDHA-**
**GEN: "Teletext-Multi-Page-System mit TPU**
**2700"**

**IDEM**

(73) Patentinhaber: **GRUNDIG E.M.V. Elektro-**
**Mechanische Versuchsanstalt Max Grundig**
**holländ. Stiftung & Co. KG.**
**Kurgartenstrasse 37**
**W-8510 Fürth/Bay.(DE)**

(72) Erfinder: **Hegendörfer, Max, Dipl.-Ing. c/o**
**GRUNDIG E.M.V.**
**Max Grundig holländ Stiftung & Co KG**
**Kurgartenstrasse 37 D-8510**
**Fürth/Bayern(DE)**

## Beschreibung

Die Erfindung betrifft eine Einrichtung mit den im Oberbegriff des Anspruchs 1 angegebenen Merkmalen.

Aus der Zeitschrift "Rundfunktechnische Mitteilungen", Jg.26, 1982, Heft 6, Seiten 254 - 257, ist bereits eine Einrichtung zur Programmierung eines Videorecorders unter Verwendung einer im Rahmen des Videotextdienstes übertragenen Programmvorschau bekannt. Bei dieser bekannten Progammierungseinrichtung sind im wesentlichen 4 Tasten vorgesehen, die zum Anwählen des Speichers, zum Löschen des Speichers, zum Anwählen der Sendung und zum Programmieren der Sendung dienen. Der bekannte Programmiervorgang läuft wie folgt ab: Eine bestimmte Videotexttafel wird durch Eingabe der zugehörigen Ziffern, z. B. "160" für "ARD diese Woche" aufgerufen und auf dem Bildschirm eines angeschlossenen Fernsehemfängers dargestellt. Das Anwählen der gewünschten Sendung erfolgt durch mehrmaliges Betätigen der Taste "Anwählen der Sendung". Durch dieses mehrmalige Betätigen der Taste "Anwählen der Sendung" tastet sich der Benutzer schrittweise von Sendung zu Sendung vor, und zwar solange, bis er die aufzuzeichnende Sendung gefunden hat. Dieses Vorgehen ist jedoch umständlich und zeitaufwendig.

Weiterhin ist es aus der EP-A-0 037 077 bekannt, unter Verwendung eines Fernbedienungsgebers automatisch definierte Sprünge innerhalb des gesamten Informationsangebotes durchzuführen. Dies geschieht wie folgt:
Mittels des Fernbedienungsgebers wird die Seitennummer einer gewünschten Seite - beispielsweise einer Programmvorschauseite - eingegeben. Daraufhin wird der Inhalt der angewählten Seite in einem Videotextseitenspeicher abgelegt, welcher als Mehrseitenspeicher ausgebildet ist. Weiterhin enthält die angewählte Seite die Seitennummern weiterer Seiten des Informationsangebotes, welche ebenfalls Programmvorschauinformationen enthalten. Der Inhalt dieser weiteren Seiten wird ebenfalls im Videotextmehrseitenspeicher abgelegt. Mittels der Tasten des Fernbedienungsgebers können die abgespeicherten Seiten in mehr oder weniger beliebiger Reihenfolge nahezu verzögerungsfrei auf dem Bildschirm dargestellt werden. Zusammenfassend betrachtet kann folglich im bekannten Fall unter Verwendung der Bedieneinheit von einer Programmvorschauseite, auf der üblicherweise Sendungen verschiedener Programminhalte aufgelistet sind, zu einer weiteren Programmvorschauseite gesprungen werden, auf welcher ebenfalls Sendungen verschiedener Programminhalte aufgelistet sind.

Ausgehend von diesem Stand der Technik liegt der Erfindung die Aufgabe zugrunde, eine Einrichtung der im Oberbegriff des Anspruchs 1 angegebenen Art derart weiterzubilden, daß der Programmiervorgang weiter vereinfacht und beschleunigt wird.

Diese Aufgabe wird bei einer Einrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen der Erfindung sind in den Unteransprüchen angegeben.

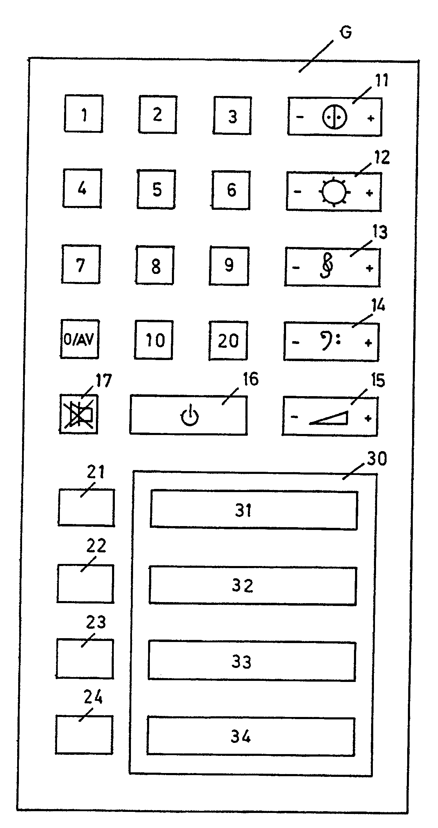

Mittels der beanspruchten Einrichtung ist es möglich, aus sämtlichen im Informationsangebot enthaltenen Programmvorschauseiten Programmbeiträge eines bestimmten Programminhaltes zu extrahieren. Weitere Vorteile der Erfindung ergeben sich aus Ausführungsbeispielen, welche im folgenden anhand der einzigen Figur näher erläutert werden.

Der in der Figur gezeigte Fernbedienungsgeber G weist Zifferntasten 1 - 9, O/AV, 10, 20, Funktionstasten 11 - 17 sowie Tasten 21 - 24 und eine Anzeige 30 mit Anzeigefeldern 31 - 34 auf. Die Aufgabe der Ziffern und Funktionstasten ist allgemein bekannt und braucht in diesem Zusammenhang nicht näher erläutert zu werden.

Wesentlich für die vorliegende Erfindung sind die Tasten 21 - 24, deren Funktionsweise aus der Erläuterung des Programmiervorganges hervorgeht. Zunächst wird durch Betätigung der Taste 21 automatisch der Beginn des Videotext-Programmiermagazins angewählt und beispielsweise die Videotext-Tafel, die die erste Sendung des laufenden Programmtages beinhaltet, auf dem Bildschirm eines (nicht gezeichneten) Fernsehempfängers dargestellt. Bei einem derartigen Vorgehen ist die umständliche Zifferneingabe, wie sie bei der bekannten Einrichtung vorgesehen ist, nicht mehr notwendig.

Alternativ hierzu ist es natürlich ebenso möglich, mittels einer der Tasten 22 - 24 das Videotext-Programmiermagazin anzuwählen.

Die Anwahl der aufzuzeichnenden Sendung selbst erfolgt unter Verwendung einer Markierung, beispielsweise eines Cursors oder eines Blinkens der Anfangs- und Endzeit der momentan eingestellten Sendung. Diese Markierung wird automatisch bei der oben beschriebenen Anwahl des Videotext-Programmiermagazins in die auf dem Bildschirm dargestellte Programmvorschau eingeblendet.

Die auf dem Bildschirm dargestellte Videotext-Tafel enthält für den Benutzer unsichtbare Signale, die Nummern von weiteren Tafeln bzw. Seiten enthalten, welche ebenfalls Programmvorschauen beinhalten, beispielsweise die Seitennummer der nächsten Programmierseite, die Seitennummer der ersten Programmierseite der nächsten Woche, die Seitennummer der Programmierseite des nächsten Tages, usw. Diese Seiten werden in einer vorteilhaften Ausgestaltung der Erfindung automatisch mit Adressen im Mehrseitenspeicher des Videotextdecoders abgelegt und stehen damit verzögerungsfrei zur Verfügung.

Die Anwahl der aufzuzeichnenden Sendung bzw. das Verschieben der Markierung zur gewünschten Sendung erfolgt nach der vorliegenden Erfindung durch ein- oder mehrmalige Betätigung einer oder mehrerer der Tasten 21 - 24. Durch Betätigung der Taste 21 kann die Markierung an die innerhalb der Programmvorschau zeitlich nachfolgende Sendung gebracht werden. War die Markierung vor der Betätigung der Taste 21 bereits auf die unterste Sendung der auf dem Bildschirm dargestellten Videotextseite eingestellt, so wird automatisch umgeblättert, d. h. die nächste Videotextseite auf dem Bildschirm angezeigt.

Durch Betätigung der Taste 22 kann die Markierung an die innerhalb der Programmvorschau zeitlich vorhergehende Sendung gebracht werden. War die Markierung vor der Betätigung der Taste 22 bereits auf die oberste Sendung der auf dem Bildschirm dargestellten Videotextseite eingestellt, so wird automatisch umgeblättert, d. h. die vorhergehende Videotextseite auf dem Bildschirm angezeigt.

Mittels der Taste 23 ist ein Sprung auf die zeitlich erste Sendung des darauffolgenden Tages möglich. Mit der Taste 24 kann auf die zeitlich erste Sendung der darauffolgenden Woche gesprungen werden.

Bei einer Fernbedienung mit den Tasten 21 - 24 können folglich einfach und schnell bestimmte Sendungen, vorzugsweise auch Sendungen mit einem bestimmten Programminhalt (z. B. Spielfilme, Sport, politische Sendungen) aus einer im Rahmen des Videotextdienstes auf mehreren Videotextseiten übertragenen Programmvorschau angewählt und auf bekannte Art und Weise, beispielsweise durch Betätigung einer Übernahmetaste, programmiert werden.

Bei dem in der Figur gezeigten Ausführungsbeispiel ist ferner jeder Taste 21 - 24 ein Anzeigefeld 31 - 34 einer Anzeige 30 zugeordnet. Die Beschriftung der Anzeigefelder ist in vorteilhafter Weise elektronisch umschaltbar.

Damit können die Tasten 21 - 24 im normalen Betrieb des Fernsehempfängers bzw. Videorecorders andere Funktionen erfüllen als beim Programmiervorgang.

Beim Programmiervorgang wird in den Anzeigefeldern die Funktion der zugehörigen Taste alphanumerisch, beispielsweise durch die Schriftzüge "VOR" (Feld 31), "RUECK" (Feld 32), "MORGEN" (Feld 33) und "NAECHSTE WOCHE" (Feld 34), oder symbolisch, beispielsweise " → " (Feld 31), " ← " (Feld 32), " → → " (Feld 33) und "→→→" (Feld 34), dargestellt.

Selbstverständlich können den Tasten 21 - 24 im Rahmen der vorliegenden Erfindung auch andere Funktionen zugeordnet werden, beispielsweise ein Sprung auf die zeitlich erste Sendung des vorhergehenden Tages, ein Sprung auf die zeitlich erste Sendung der laufenden Woche, ein Sprung auf die zeitlich erste Sendung der vergangenen Woche oder auch ein Sprung auf die Programmvorschau einer anderen Sendeanstalt.

Ferner ist es ebenso möglich, die Anzahl der Tasten, mittels derer Sprünge innerhalb der Programmvorschau durchgeführt werden, anders zu wählen als im gezeigten Ausführungsbeispiel.

Gemäß einer vorteilhaften Weiterbildung der Erfindung können die Tasten, mittels derer Sprünge innerhalb der Programmvorschau durchgeführt werden, farblich unterschiedlich gestaltet und die jeweils zugehörigen Funktionen in der entsprechenden Farbe am unteren oder oberen Rand des Fernsehempfängers alphanumerisch oder symbolisch dargestellt werden.

Ferner können die Tasten auch als Sensoren ausgebildet sein, so daß Taste und zugehöriges Anzeigefeld örtlich zusammenfallen. Damit kann das Volumen des Fernbedienungsgebers klein gehalten werden.

Die Erfindung ist nicht nur - wie oben beschrieben- bei Einrichtungen mit einem Mehrseitenspeicher anwendbar, sondern auch bei Einrichtungen, deren Speicher lediglich zur Abspeicherung einer Videotextseite ausgelegt ist. Denn auch im letztgenannten Fall wird dem Benutzer die umständliche Zifferneingabe zur Anwahl der gewünschten Videotextseite erspart. Beispielsweise wird in diesem Fall bei Betätigung der Taste 24 ("NAECHSTE WOCHE") automatisch diejenige Videotext-Tafel herausgesucht und auf dem Bildschirm dargestellt, die das Programmangebot der nächsten Woche enthält.

## Ansprüche

1. Einrichtung zur Programmierung eines Videorecorders unter Verwendung einer im Rahmen des Videotextdienstes auf mehreren Videotextseiten übertragenen Programmvorschau, mit einem Videotextseitenspeicher zur Abspeicherung des Videotextsignals, einem Bildschirm zur Darstellung einer Videotextseite und einem Fernbedienungsgeber, mittels dessen eine aufzuzeichnende Sendung angewählt und programmiert wird, wobei der Fernbedienungsgeber Tasten enthält, bei deren Betätigung automatisch definierte Sprünge innerhalb der gesamten Programmvorschau durchgeführt werden, **dadurch gekennzeichnet,** daß bei Betätigung einer der genannten Tasten Programmbeiträge eines bestimmten Programminhalts aufgerufen werden.

2. Einrichtung nach Anspruch 1, **dadurch gekennzeichnet,** daß der Videotextseitenspeicher ein Mehrseitenspeicher ist, daß bei Anwahl einer eine Programmvorschau enthaltenden Videotextseite automatisch andere, ebenfalls Programmvorschauen enthaltende Videotextseiten im Mehrseitenspeicher abgelegt werden.

3. Einrichtung nach Anspruch 1 oder 2, **dadurch gekennzeichnet,** daß den genannten Tasten Anzeigefelder zugeordnet sind, deren Beschriftung elektronisch umschaltbar ist.

4. Einrichtung nach einem der Ansprüche 1 bis 3, **dadurch gekennzeichnet,** daß die genannten Tasten als selbstanzeigende Sensoren ausgebildet sind.

## Claims

1. Device for the programming of a video recorder using a menu transmitted on a number of teletext pages as part of the teletext service, having a teletext page memory for storing the teletext signal, a screen for displaying a teletext page and a remote commander, by means of which a transmission to be broadcast can be selected and programmed, the remote commander containing buttons, upon the operation of which automatically defined jumps are carried out within the overall menu, characterised in that, upon operation of one of the said buttons, programme contributions of a certain programme content are called up.

2. Device according to Claim 1, characterised in that the teletext page memory is a multi-page memory, in that, upon selection of a teletext page containing a menu, other teletext pages, likewise containing menus, are automatically stored in the multi-page memory.

3. Device according to Claim 1 or 2, characterised in that the said buttons are assigned display fields, the inscription of which is electronically switchable.

4. Device according to one of Claims 1 to 3, characterised in that the said buttons are designed as selfindicating sensors.

## Revendications

1. Dispositif pour programmer un enregistreur vidéo moyennant l'utilisation d'une grille de programmes transmise sur plusieurs pages vidéotex dans le cadre du service vidéotex, et comportant une mémoire de pages vidéotex servant à mémoriser le signal vidéotex, un écran servant à représenter une page vidéotex et un transmetteur de télécommande, à l'aide duquel on sélectionne et on programme une émission devant être enregistrée, le transmetteur de télécommande comportant des touches lors de l'actionnement desquelles des sauts définis de façon automatique sont exécutés à l'intérieur de l'ensemble de la grille des programmes, caractérisé en ce que lors de l'actionnement de l'une des touches, on appelle des parties du contenu déterminé d'un programme.

2. Dispositif selon la revendication 1, caractérisé en ce que la mémoire de pages vidéotex est une mémoire à pages multiples et que lors du choix d'une page vidéotex contenant une grille de programmes, d'autres pages vidéotex contenant également des grilles de programmes sont mémorisées dans la mémoire à pages multiples.

3. Dispositif selon la revendication 1 ou 2, caractérisé en ce qu'auxdites touches sont associées des zones d'affichage dont l'inscription peut être commutée par voie électronique.

4. Dispositif selon l'une des revendications 1 à 3, caractérisé en ce que lesdites touches sont agencées sous la forme de capteurs à affichage automatique.